Europäisches Patentamt

European Patent Office

Office européen des brevets

(11) Numéro de publication: **0 374 076**

**A1**

## (12) DEMANDE DE BREVET EUROPEEN

(21) Numéro de dépôt: **89480178.6**

(51) Int. Cl.⁵: **B60K 25/06, B62J 39/00**

(22) Date de dépôt: **28.11.89**

Une requête en rectification page 5, ligne 4, ligne 19; page 6, ligne 12; page 10, ligne 8 a été présentée conformément à la règle 88 CBE. Il est statué sur cette requête au cours de la procedure engagée devant la division d'examen (Directives relatives à l'examen pratiqué à l'OEB, A-V, 2.2).

(30) Priorité: **28.11.88 FR 8815878**

(43) Date de publication de la demande:
**20.06.90 Bulletin 90/25**

(84) Etats contractants désignés:
**AT BE CH DE ES FR GB GR IT LI LU NL SE**

(71) Demandeur: **Castagnola, Frédéric**
**27 route de Grenoble Les Sagnes A3**
**F-06200 Nice(FR)**

(72) Inventeur: **Castagnola, Frédéric**
**27 route de Grenoble Les Sagnes A3**
**F-06200 Nice(FR)**

(74) Mandataire: **Hautier, Jean-Louis**
**Cabinet Hautier Office Méditerranéen de Brevets d'Invention et de Marques 24 rue Masséna**
**F-06000 Nice(FR)**

(54) **Motocyclette comportant une ou plusieurs prises de force pour accessoires de travail notamment pompe à incendie, brise béton.**

(57) Motocyclette comportant une ou plusieurs prises de force (8,9) pour accessoires de travail (A,B) notamment pompe incendie, brise béton.

Une ou plusieurs prises de force (8,9) sont montées par l'intermédiaire d'un arbre creux (6) en forme de manchon fixé à l'arbre moteur (5) qui transmet le couple par l'intermédiaire d'un crabot (7) qui, selon sa position le long de l'arbre creux (6), transmet l'énergie du moteur (1) à la ou aux sorties de force (8,9) et que des moyens de fixation assurent la fixation desdits accessoires de travail (A,B) aux sorties de force (8,9).

L'invention s'applique aux motocyclettes notamment pour les services d'urgence.

FIG.1

EP 0 374 076 A1

## Motocyclette comportant une ou plusieurs prises de force pour accessoires de travail notamment pompe incendie, brise béton

La présente invention concerne une motocyclette tout terrain comportant au moins une prise de force permettant de transmettre l'énergie du moteur, soit directement soit par l'intermédiaire de générations d'énergie adaptées à un ou plusieurs accessoires de travail notamment pompe incendie, brise béton, tronçonneuse, etc.

La transmission d'énergie à un accessoire de travail embarqué sur un véhicule léger se fait généralement par l'emploi d'un groupe thermique générateur hydraulique, pneumatique ou électrique, remorquable pour les plus puissants ou portatif pour les plus petits.

Certains outils disposent de leur propre source d'énergie, fournie par un moteur thermique accouplé directement à l'accessoire, tels que les motospompes incendie, les perforateurs, les débroussailleuses, etc.

Dans tous les cas, le poids et l'encombrement des accessoires et outils transportés sont augmentés du poids et de l'encombrement des combustibles et des moteurs nécessaires à leur fonctionnement, sans compter la logistique indispensable aux remplissages des réservoirs et des différents niveaux, à l'issue d'un cycle de travail.

On connaît des véhicules légers commercialisés avec une prise de force, permettant d'entraîner des accessoires de travail, toutefois leur nombre est très limité et leur coût supérieur face au parc de véhicules déjà en circulation n'en disposant pas.

L'état de la technique peut être défini par les brevets suivants :
- US 4,545,450 G. MAMBELLI : Dispositif multifonctions contrôlé extérieurement comprenant, dans une seule malette transportable, au moins un générateur, un compresseur et une pompe, l'énergie mécanique nécessaire au fonctionnement dudit dispositif étant fournie par l'extrémité d'un seul axe flexible, les moyens d'assemblage dans ladite malette pouvant être assemblés avec au moins l'un des moyens moteurs et les moyens de contrôle sur ladite malette pour contrôler l'utilisation desdits moyens d'assemblage, l'autre extrémité dudit axe étant fait pour se connecter avec une prise d'énergie externe montée sur le moteur d'une petite mobylette.
- US,3,910,126 A. FELDER : la boîte de l'axe pédalier d'une bicyclette recouvre de façon amovible l'axe de départ d'énergie et le pignon qui entraîne un pignon monté sur la section centrale de l'axe pédalier, à l'intérieur de la boîte, pour être mû en pédalant.
- EP-A-0 081 024 DEER : mécanisme d'entraînement sélectif de machines ou dispositifs à partir de l'arbre de prise de force d'un tracteur agricole. Ce mécanisme, qui permet l'entraînement sélectif notamment d'une récolteuse-hacheuse-chargeuse attelée latéralement à un tracteur et d'un dispositif équipant une remorque attelée à ce tracteur à partir de l'arbre de prise de force dudit tracteur, comprend un arbre d'entrée et deux arbres de sortie. Cet arbre d'entrée, d'une part, et ces arbres de sortie ou des organes reliés à eux, d'autre part, présentent des profilages pouvant être amenés directement ou indirectement en prise. Un organe de commande est déplaçable entre deux positions sélectives dans chacune desquelles une venue en prise directe ou indirecte est réalisée entre les profilages de l'arbre d'entrée et ceux de l'un des arbres de sortie. L'organe de commande peut être un manchon-baladeur ou un levier coudé par exemple.

La présente invention se propose de résoudre les lacunes et problèmes énumérés ci-dessus en fournissant aux accessoires et outils l'énergie propre du moteur du véhicule, ce qui a pour effet de disposer d'une puissance accrue, d'un poids et d'un encombrement moindre, autorisant par conséquent, un élargissement des possibilités des véhicules par le transport éventuel de plusieurs accessoires de travail.

La présente invention a pour objet une motocyclette du type tout terrain comprenant au moins une prise de force à un ou plusieurs circuits de transmission embrayables simultanément ou indépendamment par un embrayage direct à obstacles.

Ainsi, la prise de force de la motocyclette, selon l'invention autorise l'entraînement d'un ou plusieurs accessoires installés à demeure ou fixés par l'intermédiaire d'une lanterne d'accouplement rapide, transformant la motocyclette en engin de travail.

Les domaines d'applications sont d'autant plus vastes que les accessoires et outils hydrauliques, pneumatiques, électriques ou à entraînement direct, sont largement diffusés sur le marché commercial.

La motocyclette équipée peut notamment assurer des missions de lutte contre l'incendie, en fixant un corps de pompe à eau sur la prise de force suivi de l'emploi de tuyaux d'incendie d'aspiration et de refoulement, ou en alimentant un groupe moteur/pompe, à entraînement hydraulique, pneumatique ou électrique, par une génération située à bord du véhicule, elle-même entraînée par la prise de force suivi de l'emploi de tuyaux incendie.

Selon cette deuxième réalisation, la motocyclette peut assurer une gamme plus étendue de missions telles que :
- les secours routiers ou aux personnes ensevelies sous des décombres par l'utilisation d'accessoires de désincarcération, de levage et autres,
- le génie civil et militaire par l'emploi de brise-béton, de dameurs, de perforateurs et autres,
- l'exploitation forestière par la mise en oeuvre de tronçonneuses, de débroussailleuses et autres,
- des travaux spéciaux, sous marins (ou en ambiance explosive par l'usage de matériels adaptés étanches et anti-déflagrants.

La motocyclette ou autre engin analogue comportant une ou plusieurs prises ou sorties de force permettant de transmettre, simultanément ou indépendamment, l'énergie du moteur à un ou plusieurs accessoires notamment pompe à incendie, brise béton etc, fixés à demeure ou lors de leur utilisation, est caractérisé par le fait qu'une ou plusieurs prises de force sont montées par l'intermédiaire d'un arbre creux en forme de manchon fixé à l'arbre moteur qui transmet le couple par l'intermédiaire d'un crabot qui, selon sa position le long de l'arbre creux, transmet l'énergie du moteur à la ou aux sorties de force et que des moyens de fixation assurent la fixation desdits accessoires de travail aux sorties de force.

La transmission d'énergie des sorties de force se fait de manière axiale.

La transmission d'énergie des sorties de force se fait de manière angulaire.

Le montage de la prise de force à une ou plusieurs sorties pour les accessoires s'effectue en queue de villebrequin.

Le montage de la prise de force, à une ou plusieurs sorties pour les accessoires, s'effectue sur la transmission secondaire.

Le montage de la prise de force, à une ou plusieurs sorties pour les accessoires, s'effectue sur l'arbre de sortie de boite de vitesses.

Les moyens de fixation des accessoires de travail sont du type rapide comprenant deux platines, des plots de centrage et un collier de serrage.

La fixation des outils et accessoires sur les prises de force est réalisée par la juxtaposition de deux flasques circulaires disposant de plots de centrage empêchant toute rotation de l'un par rapport à l'autre; le flasque, fixé à demeure sur le véhicule, dispose d'un collier rigide articulé et solidaire, ce collier tend à rapprocher les plans de contact par le profil conique de sa gorge lorsqu'il est serré par une fermeture rapide.

D'autres caractéristiques et avantages de l'invention seront mieux compris à la lecture de la description qui va suivre d'exemples de réalisations faites en référence aux dessins annexés sur lesquels.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une élévation latérale d'un véhicule léger du type motocyclette avec des exemples de différents points possibles pour le montage de la prise de force selon l'invention.

La figure 2 est une élévation frontale d'un véhicule léger du type motocyclette avec deux exemples de réalisations possibles pour la lutte contre l'incendie et les feux de forêts.

La figure 3 est un schéma représentant un exemple préférentiel de prise de force à deux circuits de transmissions crabotables.

La figure 4 est une coupe en élévation de la figure 2 représentant un exemple de réalisation de la prise de force.

La figure 5 est une vue de face d'un exemple de réalisation de prise de force simplifiée ne comprenant pas de crabotage.

La figure 6 est la coupe selon A/A de la figure 5.

La figure 7 est une vue de côté de la motocyclette où la prise de force agit sur un compresseur hydraulique.

La figure 8 est une vue de face de la motocyclette mettant en évidence la disposition du groupe moteur/pompe hydraulique.

La figure 9 est une vue en perspective du groupe moteur/pompe hydraulique.

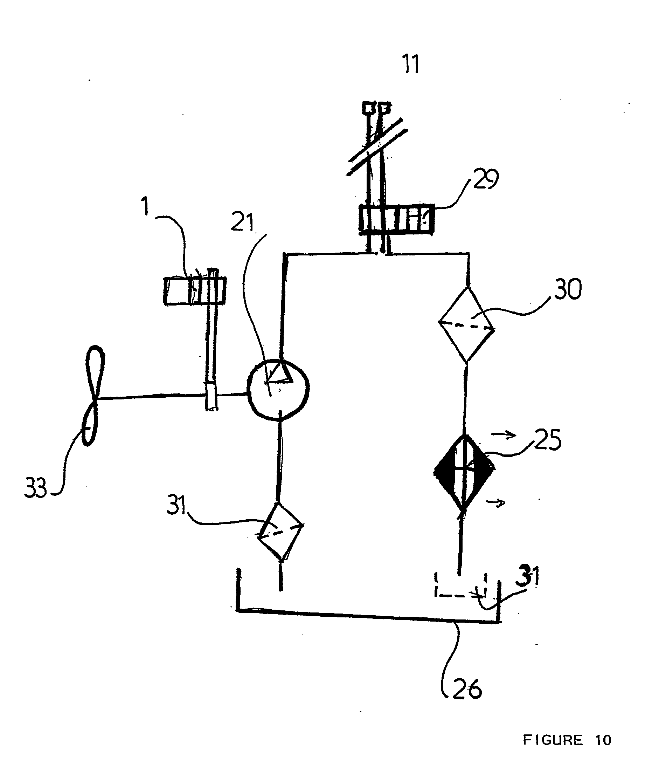

La figure 10 est une vue schématique du circuit hydraulique.

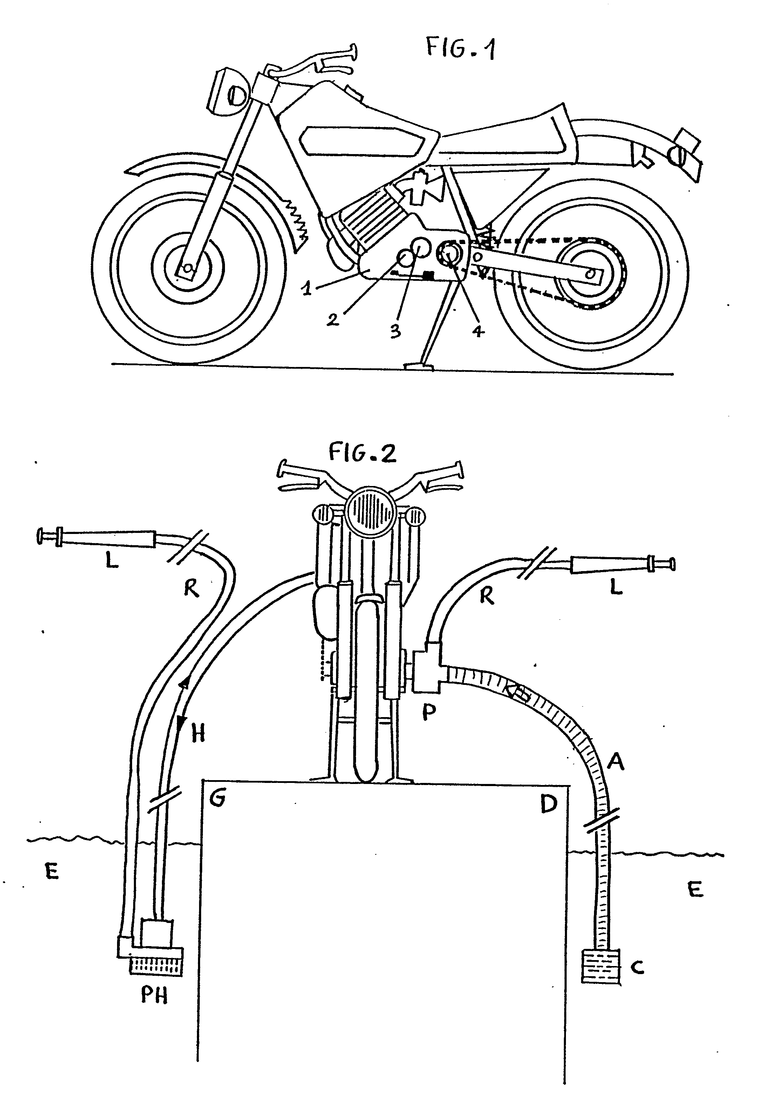

Comme représenté sur la figure 1, la prise de force peut être installée à différents endroits qui permettent de transmettre un régime et un couple suffisamment nécessaires à l'entraînement des accessoires de travail, notamment sur les éléments du moteur 1, en bout de villebrequin 2 ou sur la transmission primaire 3 ou sur l'arbre de sortie de boîte 4.

La figure 2 représente deux exemples de réalisation de motocyclette équipée contre les incendies :

A droite, la pompe P est accouplée directement sur la prise de force installée en queue de villebrequin ; l'eau E est pompée par l'intermédiaire d'un tuyau d'aspiration et d'une crépine C, puis envoyée sous pression dans un tuyau de refoulement RD alimentant une lance LD.

A gauche, la pompe immergée PH est entraînée par l'énergie hydraulique, véhiculée dans les flexibles H, fournie à partir d'une génération installée sur la motocyclette et accouplée à une prise de force, selon l'invention, située en sortie de boîte de vitesses. Le tuyau de refoulement RG alimente la lance LG en eau sous pression à partir de la pompe. Cette réalisation évite le transport des tuyaux d'aspiration souvent très encombrants.

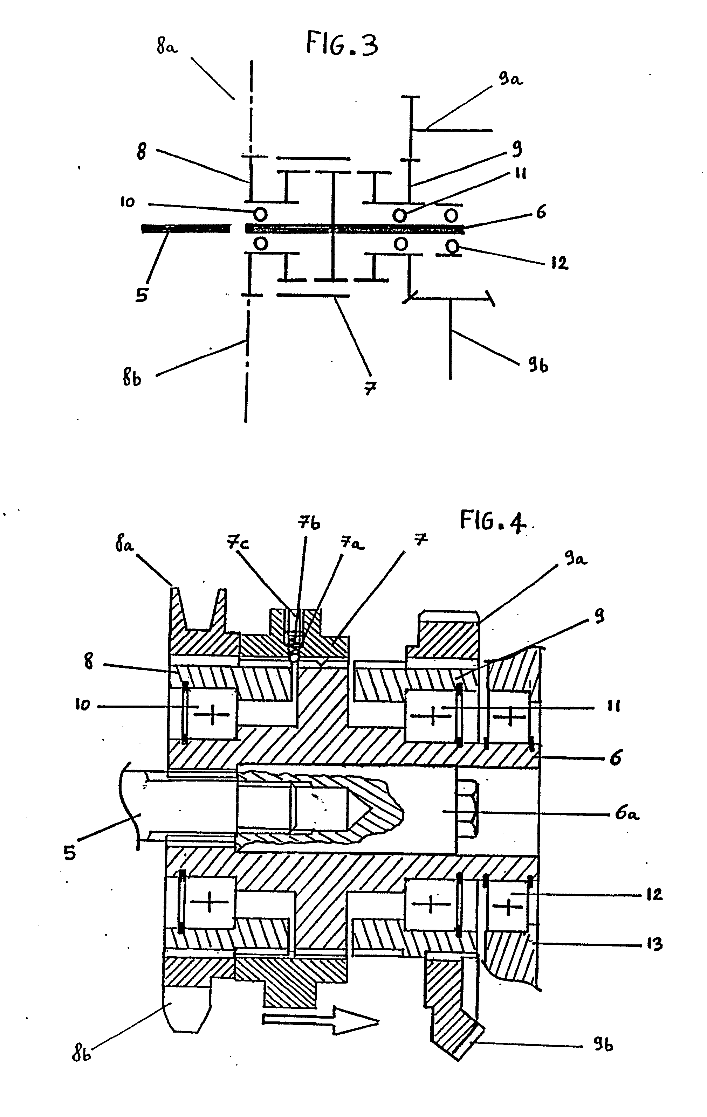

Le principe de fonctionnement de la prise de force est représenté sur la figure 3. L'arbre creux, en forme de manchon 6, fixé à l'arbre moteur 5 choisi sur le véhicule, transmet l'énergie du moteur par l'intermédiaire du crabot 7 qui, selon sa position, entraîne l'une ou l'autre ou les deux sorties de force 8 et 9, montées sur des roulements 10 et 11. La transmission d'énergie des sorties de force 8, 9 aux accessoires de travail peut se faire d'une façon axiale 9a, radiale 8a et 8b ou angulaire par l'emploi de pignons, d'engrenages, de cardans, d'accouplements élastiques, ou de tout autre système permettant de transmettre un régime et un couple suffisant.

Comme représenté dans la figure 3, le crabot 7 est d'une forme annulaire ; il transmet l 'effort par des cannelures internes de l'arbre creux 6, fixé à l'arbre moteur 5 par l'écrou 6a, aux sorties de force 8 et 9 formées d' un manchon cannelé externe monté sur des roulements 10 et 11 et supportant des organes de transmission selon les exemples : 8a poulie et courroie, 8b roue dentée pour chaîne, 9a pignon à denture droite et 9b engrenage conique.

Le porte à faux, le guidage et le maintien de la prise de force sont assurés par le palier 12 solidaire du moteur, du cadre ou du châssis du véhicule.

Le crabot 7 possède des verrouillages à billes 7a poussées par des ressorts de compression 7b maintenus à l'aide de vis de pression 7c. Les gorges extrêmes de verrouillage sont formées par l'espace compris entre l'arbre creux 6 et les sorties de forces 8 et 9, la gorge intermédiaire est usinée sur l'arbre creux. Le crabot peut être commandé manuellement ou par l'intermédiaire d'un circuit mécanique, pneumatique, hydraulique, électrique ou autre.

Afin d'illustrer la présente description, lorsqu'elle est montée en sortie de boîte de vitesses, la prise de force peut assurer la motricité par la sortie de force 8 alors que la sortie 9 peut entraîner un accessoire de travail.

Selon une variante, la prise de force ne peut comprendre qu'une seule sortie de force crabotable, 9 par exemple, pour l'entraînement d'un accessoire de travail à la fois. L'organe de transmission 11 peut pour des raisons de fabrication être usiné directement sur la sortie de force 9.

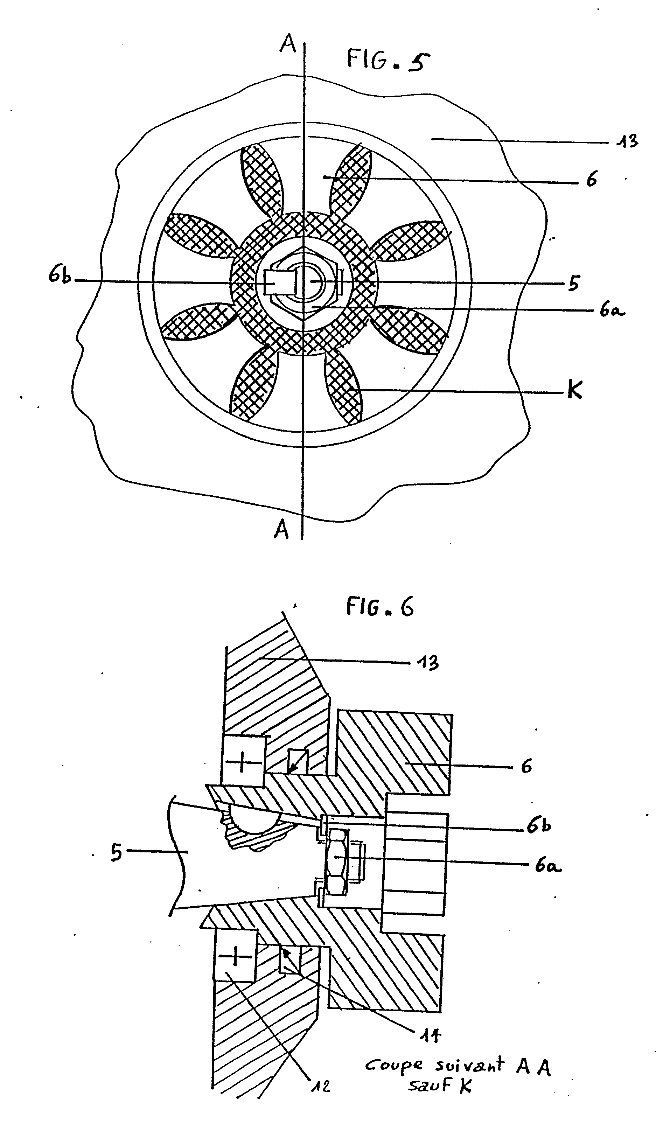

La figure 5 est une vue en élévation latérale d'un exemple de réalisation de prise de force simplifiée sans crabotage et munie d'un accouplement élastique quelconque où l'arbre creux 6 est monté en queue de villebrequin 5 au travers du carter moteur 13 et maintenu par l'écrou 6a et la rondelle 6b. Dans ce cas, l'anneau élastique K transmet le mouvement entre deux demi-accouplements.

La figure 6 représente une coupe selon A-A sans l'anneau amortisseur K, elle met en évidence le palier 12 et une étanchéité dynamique en rotation 14 qui se trouvent à l'intérieur du carter moteur 13. Cette réalisation convient plus particulièrement aux accessoires de travail fixés au véhicule lors de leur utilisation.

La fixation des outils et accessoires sur la prise de force est réalisée par la juxtaposition de deux flasques circulaires disposant de plots de centrage empêchant toute rotation de l'un par rapport à l'autre.

La flasque fixée à demeure sur le véhicule dispose d'un collier rigide articulé et solidaire, ce collier tend à rapprocher les plans de contact par le profil conique de sa gorge lorsqu'il est serré par une fermeture rapide.

Enfin, la prise de force selon l'invention peut être montée sur d'autres véhicules tels que voitures ou engins légers à plus de deux roues.

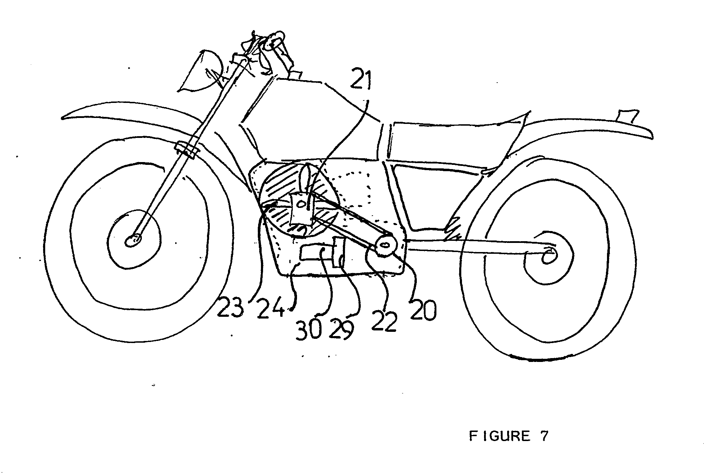

Dans les figures 7 à 9, il est mis en évidence le montage sur une prise de force 20 d'un groupe moteur pompe à huile 21.

La transmission s'effectue par chaîne 22 par exemple au niveau de l'arbre de l' hélice 23 de refroidissement du moteur. Un carénage 24 assure également le refroisissement de l'air.

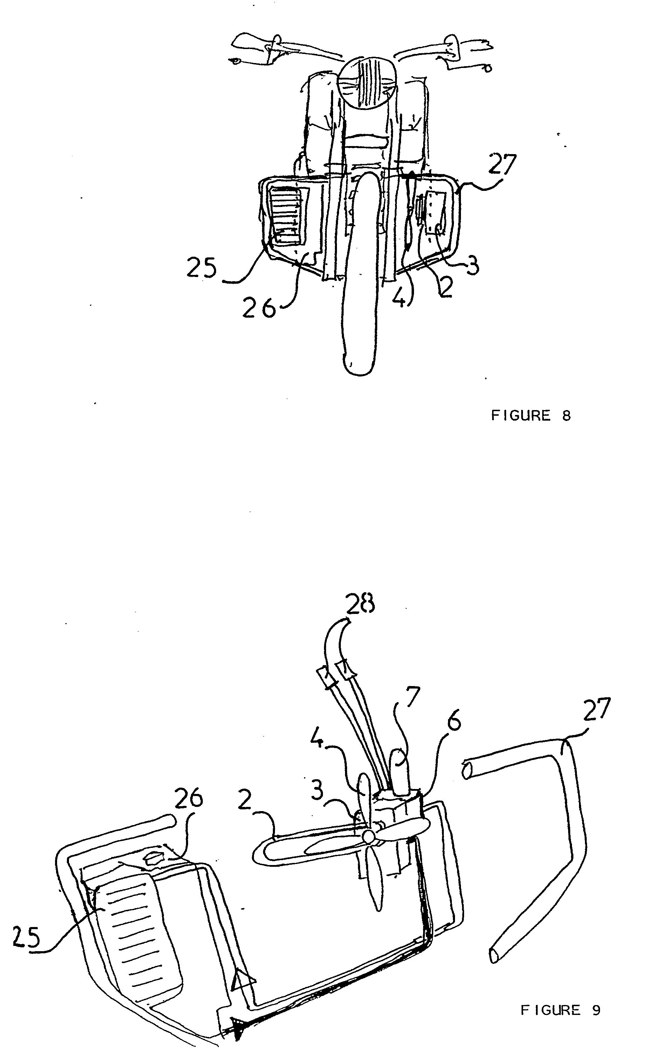

Sur les figures 8 et 9, il a été mis en évidence le radiateur d'huile 25, le réservoir d'huile 26, le protège cylindre et châssis 27 et les coupleurs hydrauliques 28 pour le raccordement des outils. Coaxialement à la pompe hydraulique 21, sont disposés le distributeur 29 et le filtre 30.

L'énergie mécanique du moteur de la motocyclette est transmise par l'intermédiaire de la prise de force 20 à la pompe hydraulique 21 qui fournit de l'énergie hydraulique aux divers outils.

L'hélice 23 assure le refroidissement du moteur de la motocyclette et de l'huile hydraulique pour le radiateur d'huile 25.

Les outils hydrauliques permettent la transformation de l'énergie hydraulique en énergie électrique, hydraulique haute pression, etc.

Le carénage de refroissement 24 assure d'une part l'écopage de l'air quand la motocyclette roule, d'autre part le refroissement du moteur et de l'huile hydraulique quand la motocyclette est à l'arrêt.

## REFERENCES

1. Moteur
2. Villebrequin
3. Transmission primaire
4. Arbre de sortie
5. Arbre moteur
6. Arbre creux

6a. Ecrou

6b. Rondelle

7. Crabot

7a. Verrouillage à bille

7b. Ressort de compression

7c. Vis de pression

8. Sortie de force

8a. Transmission d'énergie façon radiale

8b. Transmission d'énergie façon radiale

9. Sortie de force

9a. Transmission d'énergie façon axiale

9b. Transmission d'énergie à engrenage conique

10. Roulement

11. Roulement

12. Palier solidaire du moteur

13. Carter moteur

14. Etanchéité dynamique en rotation

20. Prise de force

21. Pompe à huile hydraulique

22. Chaîne

23. Hélice de refroidissement du moteur

24. Carénage de refroidissement

25. Radiateur d'huile

26. Réservoir d'huile

27. Châssis

28. Coupleur hydraulique

29. Distributeur

30. Filtre

A,B Accessoires de travail

C. Crépine

E. Eau

H. Flexibles

K. Anneau amortisseur

P. Pompe

L,D. Lance

L G. Lance

PH Pompe immergée

RD Refoulement

RG Refoulement

## Revendications

1. Motocyclette ou autre engin analogue comportant une ou plusieurs prises ou sorties de force (8, 9) permettant de transmettre, simultanément ou indépendamment, l'énergie du moteur à un ou plusieurs accessoires (A, B) notamment pompe à incendie, brise béton etc, fixés à demeure ou lors de leur utilisation caractérisé par le fait qu'une ou plusieurs prises de force (8, 9) sont montées par l'intermédiaire d'un arbre creux en forme de manchon (6) fixé à l'arbre moteur (5) qui transmet le couple par l'intermédiaire d'un crabot (7) qui, selon sa position le long de l'arbre creux (6), transmet l'énergie du moteur à la ou aux sorties de force (8, 9) et que des moyens de fixation assurent la fixation desdits accessoires de travail (A, B) aux sorties de force (8, 9).

2. Motocyclette selon la revendication 1 caractérisé par le fait que la transmission d'énergie des sorties de force (8, 9) se fait de manière axiale.

3. Motocyclette selon la revendication 1 caractérisé par le fait que la transmission d'énergie des sorties de force (8, 9) se fait de manière angulaire.

4. Motocyclette selon la revendication 1 caractérisé par le fait que le montage de la prise de force à une ou plusieurs sorties (8, 9) pour les accessoires (A, B) s'effectue en queue de vilebrequin (5).

5. Motocyclette selon la revendication 1 caractérisé par le fait que le montage de la prise de force, à une ou plusieurs sorties (8, 9) pour les accessoires (A, B), s'effectue sur la transmission secondaire.

6. Motocyclette selon la revendication 1 caractérisé par le fait que le montage de la prise de force, à une ou plusieurs sorties (8, 9) pour les accessoires (A, B), s'effectue sur l'arbre de sortie de boite de vitesses.

7. Motocyclette selon la revendication 1 caractérisé par le fait que les moyens de fixation des accessoires de travail (A, B) sont du type rapide comprenant deux platines, des plots de centrage et un collier de serrage.

8. Motocyclette selon la revendication 7 caractérisé par le fait que la fixation des outils et accessoires sur les prises de force (8, 9) est réalisée par la juxtaposition de deux flasques circulaires disposant de plots de centrage empêchant toute rotation de l'un par rapport à l'autre; le flasque, fixé à demeure sur le véhicule, dispose d'un collier rigide articulé et solidaire, ce collier tend à rapprocher les plans de contact par le profil conique de sa gorge lorsqu'il est serré par une fermeture rapide.

FIG.1

FIG.2

FIG.3

FIG.4

A

FIG. 5

13

6

6b — 5

6a

K

A

FIG. 6

13

6

5 — 6b

6a

12 — 14

Coupe suivant A A
sauf K

21

23 24

30 29 22 20

FIGURE 7

FIGURE 8

FIGURE 9

FIGURE 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D | US-A-4545450 (G. MAMBELLI) <br> * le document en entier * | 1 | B60K25/06 <br> B62J39/00 |
| A | | 2-6 | |
| | --- | | |
| Y,D | EP-A-81024 (L. MAGIN) <br> * abrégé; figures * | 1 | |
| | --- | | |
| A,D | US-A-3910126 (A. FELDER) <br> * le document en entier * | 1, 2, 4, 7 | |
| | --- | | |
| A | US-A-2792900 (A.C. HOWARD) <br> * le document en entier * | 7, 8 | |
| | --- | | |
| A | PATENT ABSTRACTS OF JAPAN <br> vol. 10, no. 171 (M-489)(2227) 17 juin 1986, <br> & JP-A-61 24622 (YAMAHA HATSUDOKI K.K.) 03 février 1986, <br> * le document en entier * | 1, 2, 5, 6 | |
| | ----- | | |

### DOMAINES TECHNIQUES RECHERCHES (Int. Cl.5 )

B60K
B62J

Le présent rapport a été établi pour toutes les revendications

| Lieu de la recherche | Date d'achèvement de la recherche | Examinateur |
|---|---|---|
| LA HAYE | 02 AVRIL 1990 | FRANKS B.G. |

EPO FORM 1503 03.82 (P0402)